# EUROPEAN PATENT SPECIFICATION

(11) **EP 2 364 901 B1**
(45) Date of publication and mention of the grant of the patent: **17.07.2013**
(21) Application number: 11151005.3
(22) Date of filing: 14.01.2011
(51) Int. Cl.: B62K 5/027

(54) **Small-Sized Vehicles**
Kleine Fahrzeuge
Véhicules de petite taille

(30) Priority: 18.02.2010 JP 2010033782
(43) Date of publication of application: 14.09.2011
(73) Proprietor: Honda Motor Co., Ltd., Tokyo 107-8556 (JP)
(72) Inventor: Fujita, Masayuki, Saitama 351-0193 (JP); Tatsumi, Hiroshi, Saitama 351-0193 (JP); Miyagishi, Syunichi, Saitama 351-0193 (JP)
(74) Representative: Beder, Jens

(56) References cited:
- EP-A1- 1 319 590
- EP-A2- 1 055 594
- WO-A1-98/24681
- US-A1- 2004 079 561

## Description

The present invention relates to a small-sized vehicle having a vehicle body rollably connected through a swing shaft to a rear wheel unit having a pair of right and left rear wheels.

Conventionally known is a small-sized vehicle including a rear wheel unit having a pair of right and left rear wheels and a vehicle body rollably connected through a swing shaft to the rear wheel unit (see Patent Document 1 (FIG. 1), for example).

FIG. 1 in Patent Document 1 shows a three-wheeled vehicle including a rear wheel unit having a pair of right and left rear wheels (WR) (the character or number in parentheses is the same as that shown in Patent Document 1, and the same applies to the other characters or numbers), a swing shaft (31) mounted through a bracket (29) to the rear wheel unit, and a vehicle body (B) rollably connected to the swing shaft (31).

In the case that the three-wheeled vehicle makes a turn during running, the vehicle body (B) can be rolled about the swing shaft (31). As a result, the vehicle body (B) is laterally inclined with respect to the rear wheel unit and the ground, so that a cornering ability as in a motorcycle can be obtained.

In using the three-wheeled vehicle, there is a case that the operator walks the vehicle or an operator's seat (22) is laterally inclined in the rest condition of the vehicle. When the vehicle body (B) is laterally inclined, a moment acts on parts located above the swing shaft (31) in a direction of falling the vehicle body (B). Accordingly, some degree of force for supporting the vehicle body (B) is required by the operator. However, the smaller this force for supporting the vehicle body (B), the better. It is therefore desired to develop a small-sized vehicle which can be handled by the operator more easily with a light feeling.

[Patent Document 1]
Japanese Patent Laid-open No. 2008-80859

A small-sized vehicle including the features of the preamble of claim 1 is known from US 2004/0079561.

It is accordingly an object of the present invention to provide a small-sized vehicle which can be handled by the operator more easily with a light feeling in the rest condition of the vehicle or in the case that the operator walks the vehicle.

In accordance with the invention as defined in claim 1, there is provided a small-sized vehicle including a rear wheel unit having a pair of right and left rear wheels, a vehicle body rollably connected through a swing shaft to the rear wheel unit, and an operator's seat fixed to the vehicle body, wherein the vehicle body is provided with an energy storing box located below a rotation axis of the swing shaft as viewed in side elevation of the vehicle.

In accordance with the invention as defined in claim 2, the vehicle body is provided with a luggage box for storing luggage, the luggage box being located opposite to the energy storing box with respect to the rotation axis and adjacent to the energy storing box.

In accordance with the invention as defined in claim 3, the luggage box has a bottom portion located below the rotation axis.

In accordance with the invention as defined in claim 4, the rotation axis is inclined upward toward the front end of the vehicle; the bottom portion of the luggage box is inclined upward toward the rear end of the vehicle; the front portion of the swing shaft is connected through a link to the vehicle body; and the link is connected to the vehicle body at a position below the bottom portion.

In accordance with the invention as defined in claim 5, the rear portion of the upper surface of the energy storing box is formed as an inclined surface inclined downward toward the rear end of the vehicle.

In accordance with the invention as defined in claim 6, the energy storing box is a fuel tank for storing fuel; a fuel pump is fixed to the inclined surface; and a fuel discharge pipe is mounted to a fixed portion of the fuel pump to the inclined surface.

In accordance with the invention as defined in claim 7, the energy storing box is located centrally in the lateral direction of the vehicle; a pair of right and left steps as a footrest are located on the right and left sides of the energy storing box; and the upper surface of each step is lower in level than the upper surface of the energy storing box.

### [Effect of the Invention]

According to the invention as defined in claim 1, the vehicle body is provided with the energy storing box located below the rotation axis of the swing shaft as viewed in side elevation of the vehicle. The heavy energy storing box is located below the rotation axis of the swing shaft connecting the vehicle body and the rear wheel unit. Accordingly, when the vehicle body is laterally inclined, a moment acts on the vehicle body in a direction of standing the vehicle body due to the weight of the energy storing box, so that the operator can easily support the vehicle body in the rest condition of the vehicle. As a result, it is possible to provide a small-sized vehicle which can be handled by the operator more easily with a light feeling in the rest condition of the vehicle or in the case that the operator walks the vehicle.

According to the invention as defined in claim 2, the vehicle body is provided with the luggage box for storing luggage, wherein the luggage box is located opposite to the energy storing box with respect to the rotation axis and adjacent to the energy storing box. The energy storing box and the luggage box whose weight is apt to change are located adjacent to each other on the opposite sides of the rotation axis of the swing shaft. Accordingly, even when the weight of the luggage box changes, the influence of this weight change can be reduced by the weight of the energy storing box, so that it is possible to reduce a difference in ride comfort between a full condition and an empty condition of the luggage box.

According to the invention as defined in claim 3, the bottom portion of the luggage box is located below the rotation axis. The weight of the luggage on the bottom portion of the luggage box can be located below or on the rotation axis. Accordingly, the operator can handle the vehicle body more easily.

According to the invention as defined in claim 4, the rotation axis is inclined upward toward the front end of the vehicle, and the bottom portion of the luggage box is inclined upward toward the rear end of the vehicle. Further, the front portion of the swing shaft is connected through the link to the vehicle body, and the link is connected to the vehicle body at a position below the bottom portion. The lowest portion of the bottom portion is formed as the front portion of the bottom portion, so that the lowest portion is located below the rotation axis. Accordingly, in storing the luggage into the luggage box, a moment can act on the vehicle body in a direction of standing the vehicle body, so that the operator can support the vehicle body more easily.
In addition, a connected portion of the link to the vehicle body is located by utilizing a dead space below the inclined portion (rear portion) of the bottom portion, so that the vehicle can be made compact.

According to the invention as defined in claim 5, the rear portion of the upper surface of the energy storing box is formed as the inclined surface inclined downward toward the rear end of the vehicle. The rear portion of the energy storing box can be extended rearward below the rotation axis owing to the formation of the inclined surface, so that the volume of the energy storing box can be enlarged.

According to the invention as defined in claim 6, the energy storing box is the fuel tank for storing fuel, wherein the fuel pump is fixed to the inclined surface, and the fuel discharge pipe is mounted to the fixed portion. The fuel pump and the fuel discharge pipe can be located below the rotation axis. Accordingly, a moment can act on the vehicle body in a direction of standing the vehicle body, so that the operator can easily support the vehicle body.

According to the invention as defined in claim 7, the energy storing box is located centrally in the lateral direction of the vehicle. Further, the pair of right and left steps as a footrest are located on the right and left sides of the energy storing box, wherein the upper surface of each step is lower in level than the upper surface of the energy storing box. The upper surface of the energy storing box is higher in level than the upper surface of each step. Accordingly, the height of the energy storing box can be enlarged to thereby ensure the volume of the energy storing box and widen the space over each step.
FIG. 1 is a left side view of a small-sized vehicle according to the present invention.
FIG. 2 is a plan view of the small-sized vehicle shown in FIG. 1.
FIG. 3 is an enlarged left side view of an essential part of the small-sized vehicle shown in FIG. 1.
FIG. 4 is a cross section taken along the line 4-4 in FIG. 3.
FIGS. 5(a) to 5(d) are schematic views for illustrating the operation of the small-sized vehicle according to the present invention and the operation of a small-sized vehicle as a comparison.

A mode for carrying out the present invention will now be described with reference to the attached drawings. The orientation of each drawing is the same as that of the reference numerals included therein. The terms of right, left, front, and rear used herein mean the directions as viewed from an operator operating this vehicle.

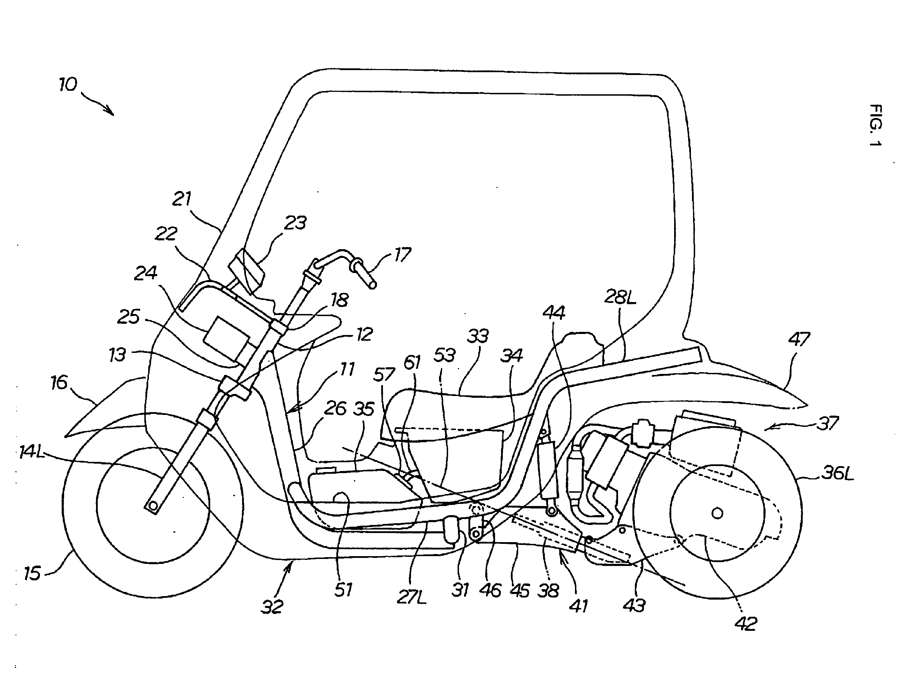

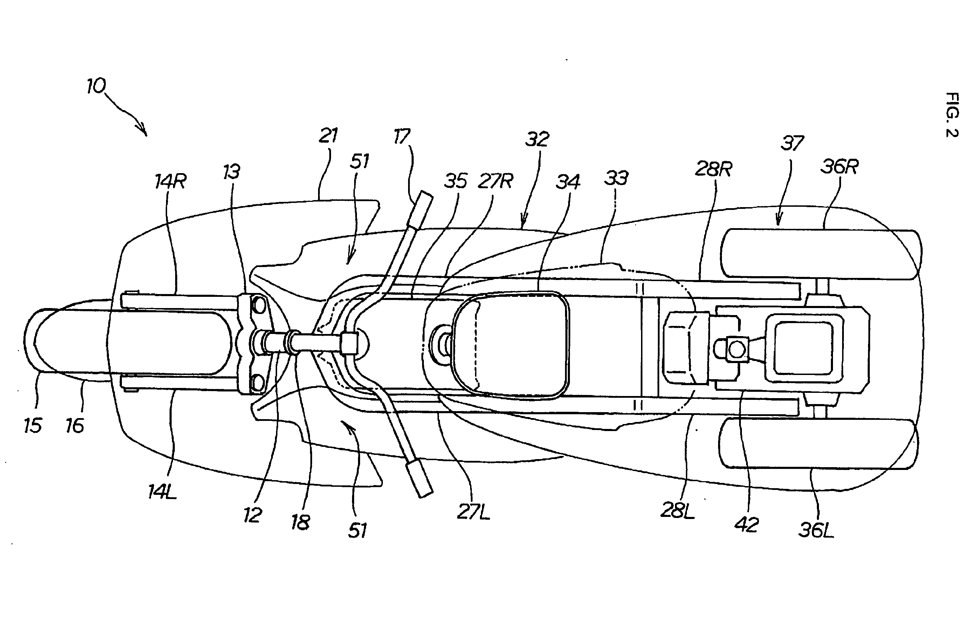

A preferred embodiment of the present invention will now be described with reference to the drawings.
As shown in FIGS. 1 and 2, reference numeral 10 generally denotes a swing type three-wheeled vehicle as the small-sized vehicle. The swing type three-wheeled vehicle 10 includes a body frame 11 having a head pipe 12 formed at the front end, a pair of right and left front forks 14R and 14L (only the left front fork 14L being shown in FIG. 1) steerably mounted through a bottom bridge 13 to the head pipe 12, these front forks 14R and 14L being able to expand and contract in their longitudinal directions, a front wheel 15 rotatably mounted to the lower ends of the front forks 14R and 14L, and a front fender 16 mounted to the front forks 14R and 14L for blocking mud and stones raised by the front wheel 15.

A steering handle 17 for steering the front wheel 15 is mounted through a top bridge 18 to the head pipe 12. A stay 22 for retaining a vehicle body cover 21 is mounted to the top bridge 18. A meter unit 23 for indicating a vehicle speed etc. is mounted to the stay 22. A battery 24 for storing electric power is mounted through a bracket 25 to the head pipe 12.

The body frame 11 is composed of the head pipe 12 forming the front end portion of the body frame 11, a down frame 26 extending downward from the head pipe 12, a pair of right and left lower frames 27R and 27L (only the left lower frame 27L being shown in FIG. 1) extending rearward from the lower portion of the down frame 26, a pair of right and left rear frames 28R and 28L (only the left rear frame 28L being shown in FIG. 1) extending rearward from the rear portions of the right and left lower frames 27R and 27L so as to be inclined upward toward the rear ends, and a cross pipe 31 connecting the lower frames 27R and 27L and supported at its central portion to the rear end portion of the down frame 26.

A seat 33 for the operator is provided at the center of a vehicle body 32. A luggage box 34 for storing luggage is located below the seat 33. A fuel tank 35 as an energy storing box is located on the front side of the luggage box 34 at a level lower than that of the luggage box 34.
The energy storing box in the present invention is not limited to the fuel tank 35 for storing fuel, but may be provided by a battery for storing electric power in an electric vehicle or the like.

A rear wheel unit 37 having a pair of right and left rear wheels 36R and 36L (only the left rear wheel 36L being shown in FIG. 1) is located on the rear side of the vehicle body 32. The rear wheel unit 37 is provided with a swing connection mechanism 41 having a swing shaft 38, and the vehicle body 32 is rollably connected to the swing connection mechanism 41.

The rear wheel unit 37 is composed of an engine 42, the rear wheels 36R and 36L to be driven by the power of the engine 42, and a bracket 43 mounted to the engine 42.
A rear cushion 44 is connected at one end thereof to the rear frames 28R and 28L. The other end of the rear cushion 44 is connected to a joint member 45 of the swing connection mechanism 41. The joint member 45 is connected through a link 46 to the lower frames 27R and 27L.
A rear fender 47 is located above the rear wheels 36R and 36L.

The position of the fuel tank 35 as viewed in plan will now be described.
As shown in FIG. 2, the fuel tank 35 is located centrally in the lateral direction of the vehicle. A pair of right and left steps 51 as a footrest are located on the right and left sides of the fuel tank 35.
Further, the luggage box 34 is also located centrally in the lateral direction of the vehicle. The luggage box 34 has a width smaller than the width of the seat 33. In the longitudinal direction of the vehicle, the rear portion of the fuel tank 35 is located below the front portion of the luggage box 34.

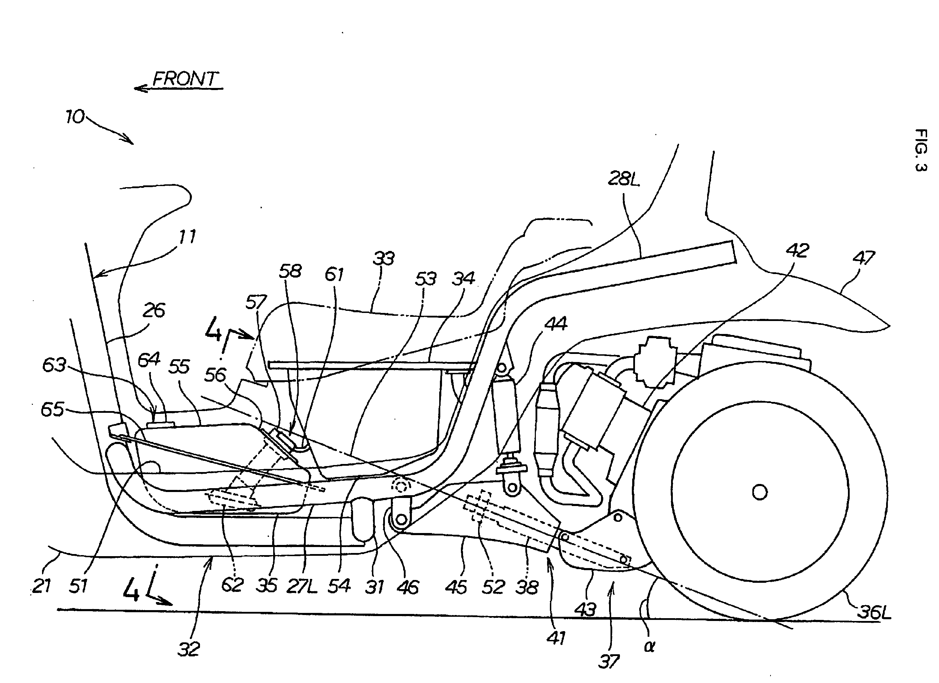

The essential part of the present invention will now be described in detail.
As shown in FIG. 3, the vehicle body 32 is rollably connected through the swing connection mechanism 41 to the rear wheel unit 37.
The rear portion of the swing shaft 38 is fixed to the bracket 43. The swing shaft 38 is inclined upward toward the front end of the vehicle, and the front portion of the swing shaft 38 is rollably mounted to the joint member 45. The joint member 45 is provided with a damper 52 for absorbing an impact receiving from the swing shaft 38 in its longitudinal direction.

The swing shaft 38 has a rotation axis 53, and the fuel tank 35 is located below the rotation axis 53 of the swing shaft 38 as viewed in side elevation of the vehicle.
Most of the luggage box 34 is located opposite to the fuel tank 35 with respect to the rotation axis 53, i.e., located above the rotation axis 53, and adjacent to the fuel tank 35 as viewed in side elevation of the vehicle. More specifically, the luggage box 34 has a bottom portion 54 located below the rotation axis 53.

The rotation axis 53 is inclined upward toward the front end of the vehicle, and the bottom portion 54 of the luggage box 34 is inclined upward toward the rear end of the vehicle. The joint member 45 accommodating the front portion of the swing shaft 38 is connected through the link 46 to the vehicle body 32. The link 46 is connected to the vehicle body 32 at a position below the bottom portion 54 of the luggage box 34.

The fuel tank 35 has an upper surface 55, and the rear portion of the upper surface 55 is formed as an inclined surface 56 inclined downward toward the rear end of the vehicle. The inclined surface 56 extends below the front portion of the luggage box 34.
A fuel pump 57 is fixed at a portion 58 to the inclined surface 56 of the fuel tank 35. A fuel discharge pipe 61 is mounted to the fixed portion 58 of the fuel pump 57. The fuel pump 57 extends into the fuel tank 35 and is provided with a strainer 62 for removing foreign matter near the bottom of the fuel tank 35. The upper surface 55 of the fuel tank 35 is provided with a fuel filler 63, and the fuel filler 63 is closed by a fuel filler cap 64. Further, the fuel tank 35 has a flange 65, and the flange 65 is fixed to the body frame 11.

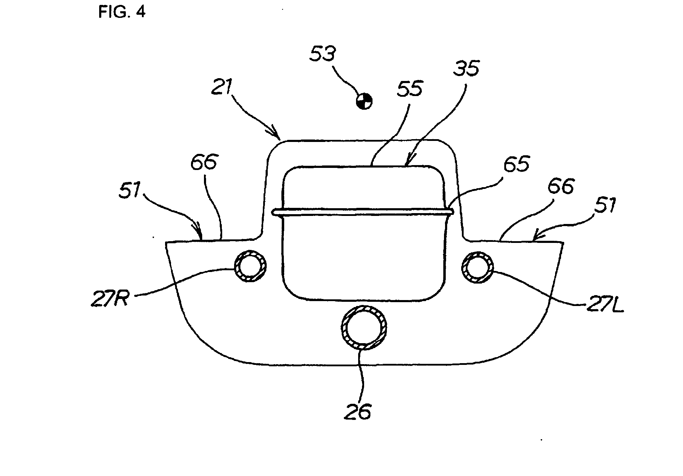

The steps 51 will now be described.
As shown in FIG. 4, the fuel tank 35 is located below the right and left lower frames 27R and 27L and above the down frame 26. The right and left steps 51 are located on the right and left sides of the fuel tank 35. Each step 51 has an upper surface 66 lower in level than the upper surface 55 of the fuel tank 35.

The operation of the swing type three-wheeled vehicle 10 will now be described.

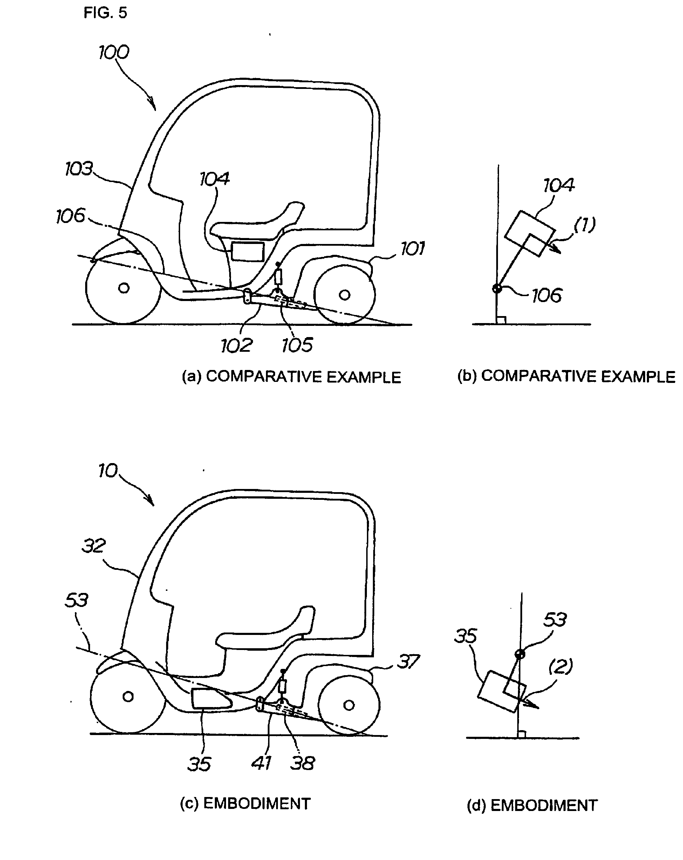

FIG. 5(a) shows a swing type three-wheeled vehicle 100 as a comparison. As shown in FIG. 5(a), a vehicle body 103 is connected through a swing connection mechanism 102 to a rear wheel unit 101, and a fuel tank 104 is located above a rotation axis 106 of a swing shaft 105 in the swing connection mechanism 102.
FIG. 5(b) illustrates a moment acting on the fuel tank 104 in this comparison. When the vehicle body 103 is laterally inclined, the fuel tank 104 is also similarly inclined and the moment having a direction shown by an arrow (1) acts on the fuel tank 104 about the rotation axis 106. This direction of the moment is a direction of falling the vehicle body 103. As a result, when the swing type three-wheeled vehicle 100 is laterally inclined in the rest condition of the vehicle in the case that a large amount of fuel is stored in the fuel tank 104, the operator must exert a force for supporting the vehicle body 103 so as to prevent falling of the vehicle body 103.

In contrast, FIG. 5(c) shows the swing type three-wheeled vehicle 10 according to this preferred embodiment, wherein the vehicle body 32 is connected through the swing connection mechanism 41 to the rear wheel unit 37, and the fuel tank 35 is located below the rotation axis 53 of the swing shaft 38 in the swing connection mechanism 41.
FIG. 5(d) illustrates a moment acting on the fuel tank 35 in this preferred embodiment. When the vehicle body 32 is laterally inclined, the fuel tank 35 is also similarly inclined and the moment having a direction shown by an arrow (2) acts on the fuel tank 35 about the rotation axis 53. This direction of the moment is a direction of standing the vehicle body 32. As a result, the operator can easily handle the swing type three-wheeled vehicle 10.

In summary, the configuration and effect of the above preferred embodiment are as follows. As shown in FIGS. 1 to 3, the small-sized vehicle 10 includes the rear wheel unit 37 having the pair of right and left rear wheels 36R and 36L, the vehicle body 32 rollably connected through the swing shaft 38 to the rear wheel unit 37, and the operator's seat 33 fixed to the vehicle body 32, wherein the vehicle body 32 is provided with the energy storing box 35 located below the rotation axis 53 of the swing shaft 38 as viewed in side elevation of the vehicle.

With this configuration, the heavy energy storing box 35 is located below the rotation axis 53 of the swing shaft 38 connecting the vehicle body 32 and the rear wheel unit 37. Accordingly, when the vehicle body 32 is laterally inclined, a moment acts on the vehicle body 32 in a direction of standing the vehicle body 32 due to the weight of the energy storing box 35, so that the operator can easily support the vehicle body 32 in the rest condition of the vehicle. As a result, it is possible to provide the small-sized vehicle 10 which can be handled by the operator more easily with a light feeling in the rest condition of the vehicle or in the case that the operator walks the vehicle.

As shown in FIG. 3, the vehicle body 32 is provided with the luggage box 34 for storing luggage, wherein the luggage box 34 is located opposite to the energy storing box 35 with respect to the rotation axis 53, i.e., located above the rotation axis 53, and adjacent to the energy storing box 35.

With this configuration, the energy storing box 35 and the luggage box 34 whose weight is apt to change are located adjacent to each other on the opposite sides of the rotation axis 53 of the swing shaft 38. Accordingly, even when the weight of the luggage box 34 changes, the influence of this weight change can be reduced by the weight of the energy storing box 35, so that it is possible to reduce a difference in ride comfort between a full condition and an empty condition of the luggage box 34.

As shown in FIGS. 3 and 5, the bottom portion 54 of the luggage box 34 is located below the rotation axis 53.
With this configuration, the weight of the luggage on the bottom portion 54 of the luggage box 34 can be located below or on the rotation axis 53. Accordingly, the operator can handle the vehicle body 32 more easily.

As shown in FIG. 3, the rotation axis 53 is inclined upward toward the front end of the vehicle, and the bottom portion 54 of the luggage box 34 is inclined upward toward the rear end of the vehicle. Further, the front portion of the swing shaft 38 is connected through the link 46 to the vehicle body 32, and the link 46 is connected to the vehicle body 32 at a position below the bottom portion 54.

With this configuration, the lowest portion of the bottom portion 54 is formed as the front portion of the bottom portion 54, so that the lowest portion is located below the rotation axis 53. Accordingly, in storing the luggage into the luggage box 34, a moment can act on the vehicle body 32 in a direction of standing the vehicle body 32, so that the operator can support the vehicle body 32 more easily.
In addition, a connected portion of the link 46 to the vehicle body 32 is located by utilizing a dead space below the inclined portion (rear portion) of the bottom portion 54, so that the vehicle 10 can be made compact.

As shown in FIG. 3, the rear portion of the upper surface 55 of the energy storing box 35 is formed as the inclined surface 56 inclined downward toward the rear end of the vehicle.
With this configuration, the rear portion of the energy storing box 35 can be extended rearward below the rotation axis 53 owing to the formation of the inclined surface 56, so that the volume of the energy storing box 35 can be enlarged.

As shown in FIG. 3, the energy storing box 35 is the fuel tank 35 for storing fuel, wherein the fuel pump 57 is fixed to the inclined surface 56, and the fuel discharge pipe 61 is mounted to the fixed portion 58.
With this configuration, the fuel pump 57 and the fuel discharge pipe 61 can be located below the rotation axis 53. Accordingly, a moment can act on the vehicle body 32 in a direction of standing the vehicle body 32, so that the operator can easily support the vehicle body 32.

As shown in FIGS. 3 and 4, the energy storing box 35 is located centrally in the lateral direction of the vehicle. Further, the pair of right and left steps 51 as a footrest are located on the right and left sides of the energy storing box 35, wherein the upper surface 66 of each step 51 is lower in level than the upper surface 55 of the energy storing box 35.
With this configuration, the upper surface 55 of the energy storing box 35 is higher in level than the upper surface 66 of each step 51. Accordingly, the height of the energy storing box 35 can be enlarged to thereby ensure the volume of the energy storing box 35 and widen the space over each step 51.

While the small-sized vehicle according to the present invention is applied to the swing type three-wheeled vehicle 10 having the engine 42 for producing the combustion of fuel supplied from the fuel tank 35 in this preferred embodiment, the present invention is not limited to such a vehicle, but it is applicable also to an electric vehicle having a motor adapted to be operated by the electric power supplied from a battery. Further, the present invention is also applicable to a hybrid vehicle.

The small-sized vehicle according to the present invention is preferably applied to a small-sized vehicle having a vehicle body rollably connected through a swing shaft to a rear wheel unit having a pair of right and left rear wheels.

10: Small-sized vehicle (swing type three-wheeled vehicle), 32: Vehicle body, 33: Seat, 34: Luggage box, 35: Energy storing box (fuel tank, battery), 36L, 36R: Rear wheel, 37: Rear wheel unit, 38: Swing shaft, 41: Swing connection mechanism, 46: Link, 51: Step, 53: Rotation axis, 54: Bottom portion of the luggage box, 55: Upper surface of the fuel tank, 56: Inclined surface, 57: Fuel pump, 58: Fixed portion, 61: Fuel discharge pipe

## Claims

1. A small-sized vehicle (10) comprising a rear wheel unit (37) having a pair of right and left rear wheels (36L, 36R), a vehicle body (32) rollably connected through a swing shaft (38) to said rear wheel unit (37), an operator's seat fixed to said vehicle body (32), an energy storing box (35),
**characterized in that**
the swing shaft (38) enables lateral inclination of the vehicle body (32) with respect to the rear wheel unit (37) along the rotation axis (53) of the swing shaft (38) when viewed in a front elevation of said vehicle (10); and
the energy storing box (35) is located below said rotation axis (53) of said swing shaft (38) as viewed in a side elevation of said vehicle (10).

2. The small-sized vehicle according to claim 1, wherein said vehicle body (32) is provided with a luggage box (34) for storing luggage, said luggage box (32) being located opposite to said energy storing box (35) with respect to said rotation axis (53) and adjacent to said energy storing box (35).

3. The small-sized vehicle according to any of the preceding claims, wherein said luggage box (32) has a bottom portion (54) located below said rotation axis (53).

4. The small-sized vehicle according to any of the preceding claims, wherein said rotation axis (53) is inclined upward toward the front end of said vehicle (10);
said bottom portion (54) of said luggage box is inclined upward toward the rear end of said vehicle (1);
the front portion of said swing shaft (38) is connected through a link to said vehicle body (32); and
said link is connected to said vehicle body (32) at a position below said bottom portion (54).

5. The small-sized vehicle according to any of the preceding claims, wherein the rear portion of the upper surface of said energy storing box (35) is formed as an inclined surface inclined downward toward the rear end of said vehicle (10).

6. The small-sized vehicle according to any of the preceding claims, wherein said energy storing box (35) is a fuel tank for storing fuel;
a fuel pump (57) is fixed to said inclined surface; and
a fuel discharge pipe (61) is mounted to a fixed portion of said fuel pump (57) to said inclined surface.

7. The small-sized vehicle according to any of the preceding claims, wherein said energy storing box (35) is located centrally in the lateral direction of said vehicle (10);
a pair of right and left steps as a footrest are located on the right and left sides of said energy storing box (35); and
the upper surface of each step is lower in level than the upper surface of said energy storing box (35).

## Patentansprüche

1. Fahrzeug (10) kleiner Größe, das eine Hinterradeinheit (37) aufweist, die ein Paar rechter und linker Räder (36L, 36R) hat, einen Fahrzeugrahmen (32), der neigbar über eine Schwenkwelle (38) mit der hinteren Radeinheit (37) verbunden ist, einen Bedienersitz, der an dem Fahrzeugrahmen (32) befestigt ist, ein energieaufnehmendes Behältnis (35),
**dadurch gekennzeichnet, dass**
die Schwenkwelle (38) eine seitliche Schrägstellung des Fahrzeugrahmens (32) in Bezug auf die hintere Radeinheit (37) entlang der Drehachse (53) der Schwenkwelle (38) ermöglicht, wenn sie in einer Vorderansicht des Fahrzeugs (10) gesehen wird; und
das energiespeichernde Behältnis (35) unterhalb der Drehachse (53) der Schwenkwelle (38) angeordnet ist, wenn sie in einer Seitenansicht des Fahrzeugs (10) gesehen wird.

2. Fahrzeug kleiner Größe gemäß Anspruch 1, wobei der Fahrzeugrahmen (32) mit einem Gepäckfach (34) zum Aufbewahren von Gepäck versehen ist, wobei das Gepäckfach (32) in Bezug auf die Drehachse (53) gegenüberliegend dem energiespeichernden Behältnis (35) angeordnet ist und benachbart zu dem energiespeichernden Behältnis (35).

3. Fahrzeug kleiner Größe gemäß einem der vorangegangenen Ansprüche, wobei das Gepäckfach (32) einen Bodenabschnitt (54) hat, der unter der Rotationsachse (53) angeordnet ist.

4. Fahrzeug kleiner Größe gemäß einem der vorangegangenen Ansprüche, wobei die Rotationsachse (53) zu dem vorderen Ende des Fahrzeugs (10) hin aufwärts geneigt ist;
der Bodenabschnitt (54), des Gepäckfachs auf das hintere Ende des Fahrzeugs (1) zu aufwärts geneigt ist;
der Frontabschnitt der Schwenkwelle (38) über eine Verbindung mit dem Fahrzeugrahmen (32) verbunden ist; und
die Verbindung mit dem Fahrzeugrahmen (32) an einer Stelle unterhalb des Bodenabschnitts (54) verbunden ist.

5. Fahrzeug kleiner Größe gemäß einem der vorangegangenen Ansprüche, wobei der hintere Abschnitt der oberen Fläche des energiespeichernden Behältnisses (35) als eine geneigte Oberfläche ausgebildet ist, die sich auf das hintere Ende des Fahrzeugs (10) zu nach unten neigt.

6. Fahrzeug kleiner Größe gemäß einem der vorangegangenen Ansprüche, wobei das energiespeichernde Behältnis (35) ein Kraftstofftank zum Speichern von Kraftstoff ist; eine Kraftstoffpumpe (57) an der geneigten Oberfläche befestigt ist; und
ein Kraftstoffauslassrohr (61) an einem festen Abschnitt der Krafstoffpumpe (57) an der geneigten Oberfläche befestigt ist.

7. Fahrzeug kleiner Größe gemäß einem der vorangegangenen Ansprüche, wobei das energiespeichernde Behältnis (35) zentral in der Seitenrichtung des Fahrzeugs (10) angeordnet ist;
ein Paar linker und rechter Tritte als Fußstützen auf der linken und rechten Seite des energiespeichernden Behältnisses (35) angeordnet ist; und
die obere Oberfläche von jedem Tritt bezüglich des Niveaus niedriger ist als die obere Oberfläche des energiespeichernden Behältnisses (35).

## Revendications

1. Véhicule de petite taille (10) comprenant une unité de roue arrière (37) comportant une paire de roues arrière droite et gauche (36L, 36R), une carrosserie de véhicule (32) raccordée avec faculté de roulement par l'intermédiaire d'un arbre oscillant (38) à ladite unité de roue arrière (37), un siège d'opérateur fixé à ladite carrosserie de véhicule (32), un coffre de stockage d'énergie (35),
**caractérisé en ce que**
l'arbre oscillant (38) permet une inclinaison latérale de la carrosserie de véhicule (32) par rapport à l'unité de roue arrière (37) le long de l'axe de rotation (53) de l'arbre oscillant (38) en vue en élévation avant dudit véhicule (10) ; et
le coffre de stockage d'énergie (35) est situé en dessous dudit axe de rotation (53) dudit arbre oscillant (38) en vue en élévation latérale dudit véhicule (10).

2. Véhicule de petite taille selon la revendication 1, dans lequel ladite carrosserie de véhicule (32) comporte un coffre à bagages (34) permettant de stocker les bagages, ledit coffre à bagages (34) étant situé opposé audit coffre de stockage d'énergie (35) par rapport audit axe de rotation (53) et adjacent audit coffre de stockage d'énergie (35).

3. Véhicule de petite taille selon l'une quelconque des revendications précédentes, dans lequel ledit coffre à bagages (34) comporte une portion de fond (54) située en dessous dudit axe de rotation (53).

4. Véhicule de petite taille selon l'une quelconque des revendications précédentes, dans lequel ledit axe de rotation (53) est incliné vers le haut vers l'extrémité avant dudit véhicule (10) ;
ladite partie de fond (54) dudit coffre à bagages est inclinée vers le haut vers l'extrémité arrière dudit véhicule (10) ;
la portion avant dudit arbre oscillant (38) est raccordée par l'intermédiaire d'une liason à ladite carrosserie de véhicule (32) ; et
ladite liaison est raccordée à ladite carrosserie de véhicule (32) en une position en dessous de ladite portion de fond (54).

5. Véhicule de petite taille selon l'une quelconque des revendications précédentes, dans lequel la portion arrière de la surface supérieure dudit coffre de stockage d'énergie (35) est formée comme une surface inclinée qui est inclinée vers le bas vers l'extrémité arrière dudit véhicule (10).

6. Véhicule de petite taille selon l'une quelconque des revendications précédentes, dans lequel ledit coffre de stockage d'énergie (35) est un réservoir de carburant permettant de stocker du carburant ;
une pompe à carburant (57) est fixée à ladite surface inclinée ; et
un tuyau de refoulement de carburant (61) est monté sur une portion fixe de ladite pompe à carburant (57) sur ladite surface inclinée.

7. Véhicule de petite taille selon l'une quelconque des revendications précédentes, dans lequel ledit coffre de stockage d'énergie (35) est situé de façon centrale dans la direction latérale dudit véhicule (10) ;
une paire de marchepieds droit et gauche en tant que repose-pieds sont situés sur les côtés droit et gauche dudit coffre de stockage d'énergie (35) ; et
la surface supérieure de chaque marchepied est à un niveau inférieur à la surface supérieure dudit coffre de stockage d'énergie (35).
